# EUROPÄISCHE PATENTANMELDUNG

(11) **EP 1 743 689 A1**
(43) Veröffentlichungstag der Anmeldung: **17.01.2007**
(21) Anmeldenummer: 05015228.9
(22) Anmeldetag: 13.07.2005
(51) Int. Cl.: B01D 61/14, B01D 61/22, B01D 61/16, B01D 61/20, C12H 1/06

(54) **Crossflow-Membranfilteranlage sowie Verfahren**

(71) Anmelder: KRONES Aktiengesellschaft, 93073 Neutraubling (DE)
(72) Erfinder: Kammerloher, Helmut, 85354 Freising (DE)
(74) Vertreter: Grünecker, Kinkeldey, Stockmair & Schwanhäusser Anwaltssozietät

(57) **Zusammenfassung**

Die Erfindung betrifft eine Crossflow-Membranfilteranlage sowie ein Filterverfahren, insbesondere zur Bierfiltration mit mehreren Filtermodulen, die jeweils mindestens eine Membranfilterkerze umfassen, und die jeweils einen Unfiltrateinlass, einen Unfiltratauslass sowie einen Filtratauslass aufweisen. Um die Pumpleistung zu reduzieren und eine gleichmäßige Filtration in allen Filtermodulen zu gewährleisten, sind die Filtermodule derart in Reihe geschaltet, dass Unfiltrat aus dem Unfiltratauslass eines Filtermoduls dem Unfiltrateinlass des folgenden Filtermoduls zugeführt wird, wobei eine Bypassleitung vorgesehen ist, die einen Teilstrom des Unfiltrats vor dem Unfiltrateinlass eines ersten Moduls an dem ersten Modul vorbeileitet und zumindest einem nachfolgenden Filtermodul als Unfiltrat zuführt.

## Beschreibung

Die Erfindung betrifft eine Crossflow-Membranfilteranlage sowie ein Verfahren mit einer Crossflow-Membranfilteranlage gemäß den Oberbegriffen der Ansprüche 1 und 11.

Der Einsatz von Kieselgur zur Bierklärung wird heute zunehmend problematisch betrachtet. Aufgrund der Entsorgungsproblematik von Kieselgur, sowie der Toxizität von Kieselgurstaub wird nach Alternativen zur herkömmlichen Bierfiltration mit Anschwemmfiltern gesucht. Eine mögliche Lösung ist das sogenannte Crossflow-Mikrofiltrationsverfahren, bei dem beispielsweise Unfiltrat durch eine beispielsweise keramische Filterkerze geleitet wird, an deren Innenseite sich eine Membran befindet. Das Unfiltrat durchströmt die Filterkerze in Längsrichtung, wobei quer zum Unfiltratstrom das Unfiltrat durch Membran und Filterkerze permeiert. Zur Filtration sind mehrere Module notwendig, die miteinander verschaltet werden. In der Regel bringt eine Förderpumpe (Druckpumpe, Speisepumpe) den Systemdruck auf und fördert den benötigten Unfiltratstrom nach. Eine zweite Pumpe (Volumenstrompumpe, Kreislaufpumpe) erzeugt den zum Erreichen der benötigten Überströmgeschwindigkeiten erforderlichen Volumenstrom zur Filtration. Die parallele Verschaltung von Modulen eignet sich insbesondere für geringe Kanaldurchmesser von Membranfilterkerzen. Dies hat jedoch einen hohen benötigten Volumenstrom zur Folge, so dass eine sehr hohe Pumpleistung notwendig ist, um ein ideales transmembranes Druckgefälle zu erzielen.

Im Gegensatz dazu bewirken größere Kanaldurchmesser der Filterkerzen geringere Druckverluste und ermöglichen so eine Reihenschaltung von Modulen. Dies hat geringere notwendige Volumenströme bei vergleichbaren Membranflächen zur Folge. Die Druckverluste der Membrane addieren sich allerdings.

Zum Erlangen und Aufrechterhalten eines optimales Fluxes durch die Membranen sind somit besonders bei Membranen mit geringem Kanaldurchmesser Pumpen großer Leistung notwendig.

Das Problem von Reihenschaltungen dabei ist, dass sich die Druckverluste der einzelnen Membrane aufaddieren. Gleichzeitig weisen jedoch die Filterkerzen Optima für transmembranen Druck auf, bei dem optimaler Flux möglich ist. Dieses Optimum befindet sich nicht bei maximal möglichen transmembranen Druckgefälle. Ist die Druckdifferenz groß, so bewirkt dies ein beschleunigtes Verblocken der Anlage. Ist die Druckdifferenz zu klein, ist der Flux nicht groß genug.

Bei Reihenschaltung mehrerer Module ergibt sich somit das Problem, dass die gesamte Reihe nur in begrenzten Regionen der Durchflussstrecke im Optimum läuft. Dieser Bereich wandert während der Filtrationsdauer vom Einlauf der Reihenschaltung zum Auslauf, wobei zu Beginn der Auslauf minimalen Flux hat und am Einlauf ein Verblocken gefördert wird. Je weiter das Optimum nach hinten wandert, desto länger ist der verblockte Bereich zu Beginn der Reihenschaltung. Man müsste demnach den optimalen Durchfluss für jedes einzelne Modul regeln. Diese teure Lösung erfordert jedoch für jedes Modul entsprechende Regelventile, Drucksensoren und Volumenmessgeräte. Eine derartige Anordnung ist zu aufwendig.

Im Hinblick auf den Stand der Technik liegt daher der vorliegenden Erfindung die Aufgabe zugrunde, eine Membranfilteranlage und ein entsprechendes Verfahren bereitzustellen, die auf einfache und kostengünstige Art und Weise ermöglichen, eine optimale Unfiltrat-Flussmenge durch die Membrane der einzelnen Filtermodule zu gewährleisten, wobei die Pumpleistung minimiert werden kann.

Erfindungsgemäß wird diese Aufgabe durch eine Crossflow-Membranfilteranlage und ein entsprechendes Verfahren zur Filtration nach den Ansprüchen 1 und 11 gelöst.

Gemäß der vorliegenden Erfindung werden die Filtermodule so in Reihe geschaltet, dass das Unfiltrat aus einem Filtermodul in das nächste Filtermodul geleitet wird. Der zusätzliche Bypass leitet einen Teilstrom des Unfiltrats aus einer Unfiltratzuführung vor dem Unfiltrateinlass eines ersten Moduls an dem ersten Modul vorbei und führt es zumindest einem weiteren nachfolgenden Filtermodul zusätzlich als Unfiltrat zu. (Dabei versteht man unter einem nachfolgenden nicht zwangsläufig das nächste Filtermodul. Das erste Filtermodul muss auch nicht zwangsläufig das erste der Reihe sein.) Der Bypass kann je nach Druckverhältnis auch Unfiltrat vor dem Unfiltrateinlass mehrerer Filtermodule an den entsprechenden Filtermodulen vorbeileiten und mindestens einem weiteren nachfolgenden Filtermodul zuführen. Somit kann der Bypass dem Druckabfall der einzelnen Filtermodule entgegenwirken, ohne dass eine Regelung der Unfiltrat-Flussmenge, der Filtratflussmenge und der Druckverhältnisse der einzelnen Filtermodule notwendig ist. Dies ermöglicht der geringere Druckabfall in der Bypassleitung. Das heißt, durch zusätzliches Zuführen von Unfiltrat über die Bypassleitung kann der Druckverlust in dem entsprechenden Modul kompensiert bzw. abgeschwächt werden. Somit ist ein konstanter , ausgeglichener Unfiltratdurchfluss durch die einzelnen Filtermodule gewährleistet. Somit kann in allen Filtermodulen gleichzeitig ein ideales transmembranes Druckgefälle erzielt werden. Ein frühzeitiges Verblocken einzelner Module kann somit verhindert werden. Der Bypass sorgt auch dafür, dass sich der Durchfluss durch die Membrane (Filtratabfluss im Modul) erhöht. Die vorliegende Erfindung ermöglicht, dass die Pumpleistung reduziert werden kann, Energiekosten gespart werden können und die Effizienz der Membranfilteranlage, d.h. der Filtratabfluss pro Zeit optimiert werden kann.

Gemäß einer bevorzugten Ausführungsform weist die Bypassleitung zumindest eine Abzweigleitung auf, über die Unfiltrat dem entsprechenden nachfolgenden Filtermodul zugeführt wird. Die Bypassleitung kann dann z.B. in eine Verbindungsleitung münden, die zwischen dem Unfiltratauslass eines Filtermoduls und dem Unfiltrateinlass des nachfolgenden Filtermoduls angeordnet ist. Ein derartiger Aufbau ist einfach und leicht zu realisieren.

Gemäß einer bevorzugten Form der vorliegenden Erfindung weist die Anlage n Filtermodule (n E IN) auf und die Bypassleitung leitet n-1 Filtermodulen Unfiltrat zu. Eine derartige Anordnung ergibt sich daraus, dass das erste Filterelement, das durch den Bypass überbrückt wird, über den Bypass kein weiteres Unfiltrat zugeführt bekommt.

In vorteilhafter Weise weist die Bypassleitung in mindestens einer Abzweigleitung eine Einrichtung zum Einstellen der Flussmenge des Unfiltrats im nachfolgenden Filtermodul auf. Eine derartige Einrichtung zum Einstellen der Durchflussmenge umfasst beispielsweise einen Flussminderer, d.h. z.B. in einfachster Ausführung Klappen und/oder Blenden. Durch eine derartige Einrichtung kann die Durchflussmenge des Unfiltratstroms im nachfolgenden Filtermodul eingestellt werden. So kann beispielsweise der zusätzliche Unfiltratstrom, der den ersten Filtermodulen einer Reihe zugeführt wird, geringer gewählt werden als die Durchflussmenge an Unfiltrat, die zusätzlich in der Reihe weiter hinten angeordneten Filtermodulen zugeführt wird, da sich die Druckverluste der einzelnen Filtermodule aufaddieren. Durch Einstellen von Klappen und/oder Blenden, bzw. anderer Durchflussbegrenzer, kann eine bestimmte Durchflussmenge eingestellt werden, die dann während des gesamten Prozesses aufrechterhalten bleibt.

Somit kann der Unfiltratfluss, der über die Bypassleitung dem zumindest einem nachfolgenden Filtermodul zugeleitet wird, derart eingestellt werden, dass er in allen Filtermodulen etwa im gleichen Bereich liegt, so dass es zu einheitlichen optimalen transmembranen Druckgefällen kommt.

Vorteilhafterweise ist eine Rückführleitung vorgesehen, die Unfiltrat aus dem letzten Filtermodul erneut der Membranfilteranlage zuführt. Somit kann die Anlage im Kreislauf betrieben werden. Es ist jedoch auch möglich, dass das letzte Filtermodul über einen entsprechenden Pufferspeicher das Unfiltrat erneut der Membranfilteranlage zuführt.

In vorteilhafter Weise ist die Membranfilterkerze eine Multitube-Membranfilterkerze, durch die sich mehrere Kanäle erstrecken. Derartige Filterkerzen weisen eine hohe Effizienz auf. Vorteilhafterweise ist der Durchmesser der Kanäle der Multitube-Membranfilterkerzen in einem Bereich von 0,5 bis 10 mm. Bei Keramikkerzen liegt der Durchmesser vorzugsweise z.B. bei ca. 2-8mm, bei Kunststoffkerzen vorzugsweise bei 0,5 - 2 mm.

Die vorliegende Erfindung wird nachfolgend unter Bezugnahme der begleitenden Zeichnungen näher erläutert.

### Dabei zeigt

- Fig. 1: schematisch den prinzipiellen Aufbau der vorliegenden Erfindung,
- Fig. 2: einen Querschnitt durch ein Filtermodul mit einer Filterkerze,
- Fig. 3: einen Schnitt entlang der Linie I-I in Fig. 2,
- Fig. 4: eine perspektivische Darstellung einer Filterkerze,

- Fig.5: eine schematische Vorderansicht eines Filtermoduls mit mehreren Membranfilterkerzen,
- Fig. 6: eine perspektivische Darstellung des in Fig. 5 gezeigten Filtermoduls,
- Fig. 7: schematisch die erfindungsgemäße Crossflow-Membranfilteranlage als Bierfilter.

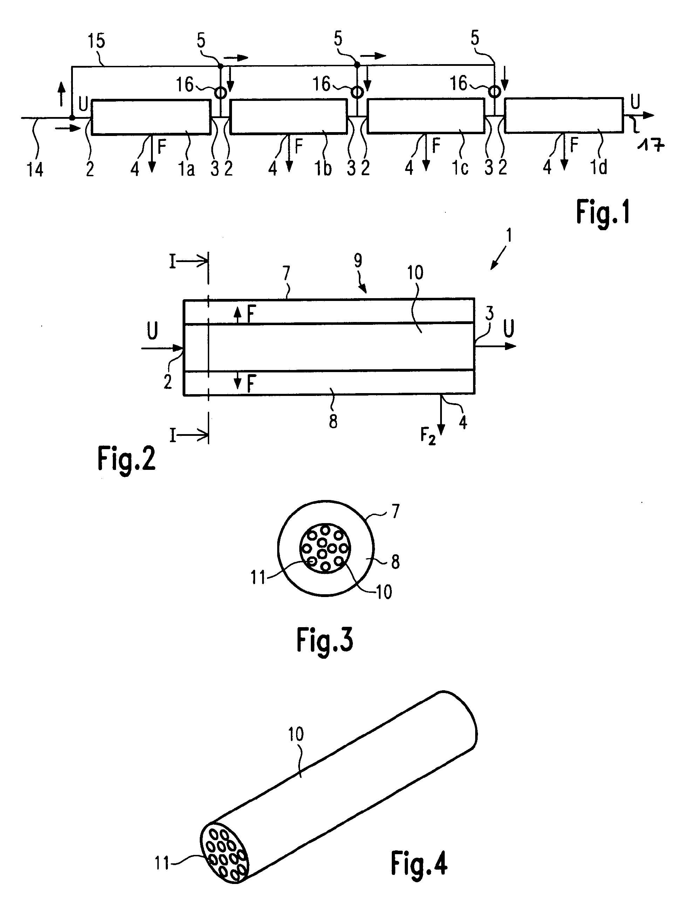

Fig. 1 zeigt schematisch den Aufbau der erfindungsgemäßen Crossflow-Membranfilteranlage. Wie aus Fig. 1 hervorgeht, sind gemäß der vorliegenden Erfindung mehrere, hier in Fig. 1 vier Filtermodule 1 in Reihe hintereinander angeordnet. Die Filtermodule 1 umfassen hier jeweils einen Unfiltrateinlass 2, einen Unfiltratauslass 3 sowie einen Filtratauslass 4. Die Filtermodule 1 sind derart hintereinander angeordnet, dass das Unfiltrat aus einem Unfiltratauslass 3 eines Filtermoduls 1a dem Unfiltrateinlass 2 des folgenden Filtermoduls 1 b zugeführt wird.

Bei den Filtermodulen 1 a, b, c, d handelt es sich um Filtermodule, die jeweils mindestens eine Membranfilterkerze 10 umfassen. Fig. 2 bis 4 zeigen schematisch ein derartiges Filtermodul und dessen Funktionsweise mit nur einer Multitube-Membranfilterkerze 11. Das Filtermodul 1 weist hier ein Druckgehäuse 7 auf, das eine Membranfilterkerze 10 umfasst, die im Crossflow von Unfiltrat U, d.h. hier von ungefilterten Getränken, wie z.B. ungefiltertem Bier, Saft, Wein oder Milch durchströmt wird. Zwischen der Membranfilterkerze 10 und dem Druckbehälter 7 bildet sich ein Filtratraum 8 aus. Die Multitube-Membranfilterkerze 10 weist, wie in Fig. 3 und 4 näher dargestellt ist, mehrere Kanäle 11 auf, die sich in Längsrichtung durch die Filterkerze 10 erstrecken. Der Kanaldurchmesser liegt in einem Bereich von 2 bis 10mm bei keramischen Filterkerzen. Bei Filterkerzen aus Kunststoff liegt der Durchmesser in einem Bereich von 0,5 - 2mm.

Die Filterkerze 10 kann aus keramischem Material, wie beispielsweise AL₂O₃ ausgebildet sein, wobei auf der Röhreninnenseite eine wenige µm starke Membranschicht z.B. aus Al₂O₃, ZrO₂, TiO₂ angeordnet sein kann. Die Porengröße beträgt beispielsweise bei der Bierfiltration 0,4 bis 0,8 µm. Die Filterkerze 11 kann auch aus Kunststoff, beispielsweise PE, PSE gebildet werden. Bei der Filtration tritt Unfiltrat U in die Kanäle 11 der Filterkerze 10, tritt durch die Membran in den Kanälen 11, sowie durch die Keramik der Filterkerze 10 und verlässt die Oberfläche der Filterkerze 10 als Filtrat und tritt in den Filtratraum 8, wo das Filtrat F über den Filtratauslass 4 abgezogen werden kann. Das Unfiltrat U, das durch die Kanäle 11 fließt, verlässt das Modul 1 an seinem Unfiltratauslass 3 und kann beispielsweise dem nächsten Unfiltrateinlass 2 des nächsten Filtermoduls 1 zugeführt werden.

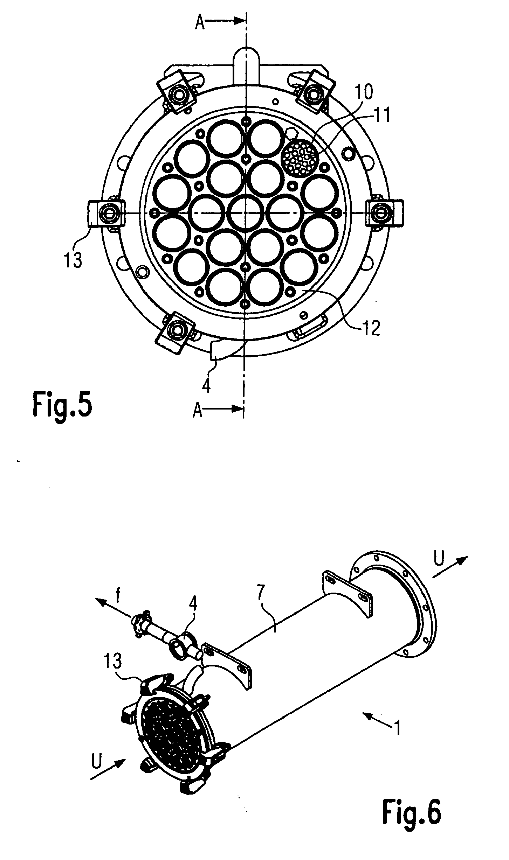

Gemäß einer bevorzugten Ausführungsform umfasst das Filtermodul jedoch mehrere Membranfilterkerzen 10, wie aus Fig. 5 und 6 hervorgeht. Der Aufbau einer solchen Anordnung entspricht im Wesentlichen dem Aufbau, wie er im Zusammenhang mit Fig. 2 bis 4 beschrieben wurde mit der Ausnahme, dass in dem Druckbehälter 7 mehrere Multitube-Membranfilterkerzen, z.B. 7 bis 19 Stück parallel zueinander angeordnet sind. In Fig. 5 ist auf der Vorderseite eine Abdeckplatte 12 zu erkennen, die über eine Befestigungseinrichtung 3 an den rohrförmigen Druckbehälter 7 befestigt, hier angeflanscht ist.

Bei der Filtration wird hier das Unfiltrat in die einzelnen Membranfilterkerzen 10 gepumpt. Wie im Zusammenhang mit Fig. 2 bis 4 beschrieben, durchtritt das Unfiltrat im Crossflow die Filterkerzen 10, tritt in den Filtratraum 8 und verlässt das Modul 1 durch den Filtratauslauf 4. Für die vorliegende Erfindung können auch sogenannte Doppel- oder Mehrfachmodule verwendet werden, wobei beispielsweise zwei (oder mehr) Einzelfiltermodule 1 fest miteinander, beispielsweise über den Flansch 26, miteinander verbunden werden, derart, dass Filtrat- und Unfiltratraum voneinander abgedichtet sind. Ein solches Doppelmodul weist dann beispielsweise auch zwei Filtratauslässe 4 auf.

Wie Fig. 1 zeigt, weist die erfindungsgemäße Crossflow-Membranfilteranlage zusätzlich zu den in Reihe geschaltenen Filtermodulen 1 a, b, c, d eine Bypassleitung 15 auf. Hier ist die Bypassleitung 15 für vier Filtermodule 1 vorgesehen, die Bypassleitung 15 kann für eine beliebige Anzahl hintereinander geschalteter Module realisiert werden.

Die Bypassleitung 15 leitet einen Teilstrom b des Unfiltrats vor dem Unfiltrateinlass 2 des ersten Moduls 1 a an dem ersten Modul 1a vorbei. Das bedeutet, dass ein Teil a des Unfiltrats aus der Unfiltratzuführung 14 direkt über den Unfiltrateinlass 2 dem ersten Filtermodul 1 a der Reihe zugeführt wird und ein anderer Teilstrom b in die Bypassleitung 15 geleitet wird. Wenn auch nicht dargestellt, kann eine entsprechende Einrichtung vorgesehen sein, die das Verhältnis der Unfiltratströme b/a in der Bypassleitung 15 und in der Leitung direkt zum Filtrateinlass 2 einstellen kann.

Die Bypassleitung 15 ist derart konfiguriert, dass sie, wie gesagt, den Teilstrom b des Unfiltrats an dem ersten Modul 1 vorbeileitet und zumindest einen nachfolgenden Filtermodul 1 zusätzlich als Unfiltrat zuführt. Hier führt die Bypassleitung das Unfiltrat zusätzlich dem zweiten, dritten und vierten Filtermodul 1b, c, d über eine entsprechende Abzweigleitung 5 zu. Bei der in Fig. 1 gezeigten Ausführungsform mündet die Abzweigleitung 5 jeweils in die Verbindungsleitung zwischen dem Unfiltratauslass 3 eines Filtermoduls und dem Unfiltrateinlass 2 des nachfolgenden Filtermoduls. Wie Fig. 1 zeigt, weisen die Abzweigleitungen 5 jeweils Einrichtungen 16 auf zum Einstellen der Flussmenge des Unfiltrats im nachfolgenden Filterelement 1. Eine derartige Einrichtung kann einen Durchflussbegrenzer, wie beispielsweise eine Klappe und/oder eine Blende umfassen. Mit einer derartigen Einrichtung 16 können die benötigten Durchflussmengen in den einzelnen Modulen gezielt eingestellt werden. Dies ist vorteilhaft, da sich die Druckverluste in den einzelnen Modulen 1 a, b, c, d aufaddieren, so dass der gesamte Druckverlust in den hinteren Modulen höher ist als in den vorderen Modulen und demnach den hinteren Modulen zusätzlich mehr Unfiltrat über die Bypassleitung 15 zugeführt werden muss als den vorderen Modulen.

Die Aufgabe des Bypasses 15 ist, dem Druckabfall der einzelnen Module 1 a, b, c, d entgegenzuwirken. Dies ermöglicht der geringere Druckabfall in der Bypassleitung 15. Somit kann eine konstante Unfiltratdurchflussmenge durch die einzelnen Module 1 a, b, c, d gewährleistet werden, die im Wesentlichen im gleichen Bereich liegt. Vorteilhafterweise liegt die Flussmenge des Unfiltrats durch ein Filtermodul bei mindestens 100l/hm² bis zu 150l/hm² bei 10m² Filterfläche pro Modul (beispielsweise bei der Bierfiltration) . Somit kann ein optimaler Unfiltratdurchfluss, ein optimales transmembranes Druckgefälle und somit ein erhöhter Filtratabfluss realisiert werden. Durch die erfindungsgemäße Anordnung kann die Leistung der Pumpe, die das Unfiltrat durch die Membranfilteranlage pumpt, reduziert werden, wodurch Betriebskosten gesenkt werden können. Nach dem letzten Filtermodul 1 d kann eine Rückführleitung 17 vorgesehen sein, die (nicht dargestellt) das Unfiltrat in einer Schleife wieder dem ersten Filtermodul der Crossflow-Membranfilteranlage zuführt, so dass ein Filterkreislauf realisiert wird.

Im Betrieb wird bei der in der Fig. 1 gezeigten Crossflow-Membranfilteranlage über eine nicht dargestellte Pumpe Unfiltrat U über eine Unfiltratzufuhr 14 zugeführt und in zwei Teilströme a und b aufgeteilt, wobei ein Teilstrom a dem Unfiltrateinlass 2 des ersten Filtermoduls 1a zugeführt wird und ein zweiter Teilstrom b in die Bypassleitung 15 geleitet wird. Das Verhältnis der Durchflussmengen b/a liegt beispielsweise in einem Bereich von 1/10 Das Unfiltrat U, das in das erste Filtermodul 1a eintritt, strömt durch das Filtermodul 1a und durchtritt im Cross-Flow die mindestens eine Membranfilterkerze 10 und verlässt über den Filtratauslauf 4 das erste Filtermodul 1a. Das Unfiltrat, das nicht gefiltert wurde, verlässt über den Unfiltratauslass 3 das Filtermodul 1a und tritt in das nächste Filtermodul 1 b ein, wobei sich der zuvor beschriebene Vorgang für die nachfolgenden Filtermodule in ähnlicher Weise wiederholt. Dem zweiten Filtermodul 1b wird über die Bypassleitung 15, insbesondere über die Abzweigleitung 5, eine bestimmte Menge an Unfiltrat zusätzlich zu dem Unfiltrat aus dem ersten Filterelement 1a zugeführt, um somit Druckverluste im Filtermodul 1b zu minimieren. Die Durchflussmenge des Unfiltrats, das aus der Bypassleitung 15 dem nachfolgenden Filtermodul 1b zugeführt wird, kann über eine Einrichtung 16, d.h. über entsprechend eingestellte Klappen oder Blenden, vorab eingestellt werden. Je nach Druckverhältnis kann beispielsweise zwischen dem ersten und zweiten Modul 1 a und 1 b über die Bypassleitung Unfiltrat aus dem ersten Modul 1 a abgeleitet werden.

In gleicher Weise wie zuvor beschrieben, wird zusätzlich auch den Modulen 1 c und 1 d zusätzlich Unfiltrat über die Bypassleitung 15 zugeführt. Über die Rückführleitung 17 kann das Unfiltrat U aus dem letzten Filtermodul 1d im Kreislauf (hier nicht dargestellt) rückgeführt werden. Durch die Bypassleitung 15 kann dem Druckabfall in den einzelnen Modulen entgegengewirkt werden, da der Druckabfall im Bypass geringer ist.

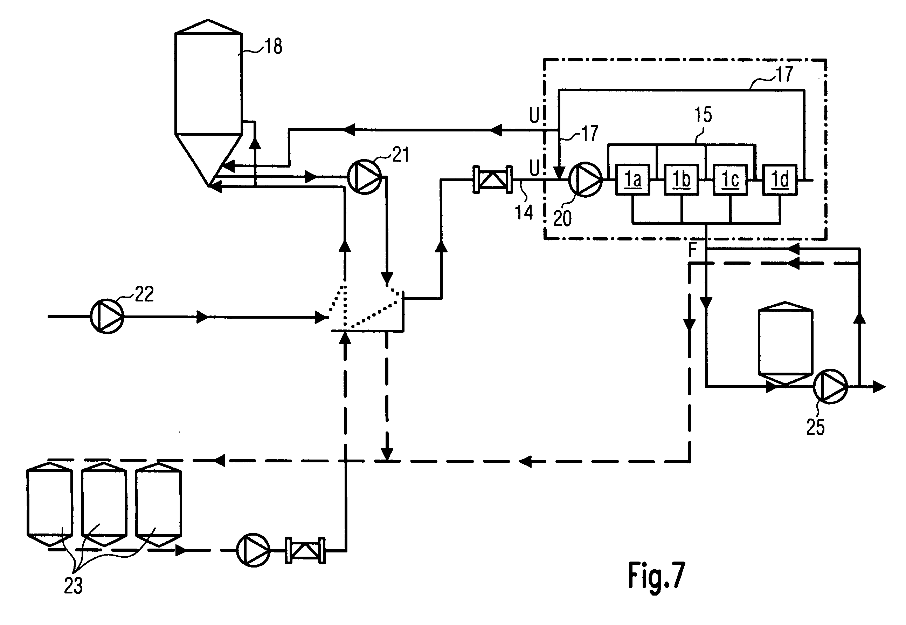

Fig. 7 zeigt die in Fig. 1 gezeigte Crossflow-Membranfilteranlage als Bierfilter. Das Unfiltrat, d.h. das Bier, wird einem Puffertank 18 über die Pumpe 22 direkt aus dem Gärkeller zugeführt. Über eine Unfiltratzuleitung 14 wird das ungefilterte Bier über eine Druckpumpe 21, ein entsprechendes Schaltungspanel und ggf. einen Kühler aus dem Unfiltratpuffertank 18 der Crossflow-Membranfilteranlage zugeführt. Die Pumpe 20 pumpt das Unfiltrat, wie zuvor beschrieben, in die in Reihe geschaltenen Filtermodule 1 a, b, c, d sowie in die Bypassleitung 15. Hier ist deutlich zu erkennen, dass die Filtration über die Rückführleitung 17 im Kreislauf erfolgt, wobei das Unfiltrat aus dem letzten Filtermodul 1 d in Flussrichtung vor der Pumpe 20 der Unfiltratzuführung 14 zugeführt werden kann, um emeut durch die Filtermodule gepumpt zu werden. Über die Rückführleitung 17 kann jedoch das Unfiltrat auch zunächst wieder in den Puffertank 18 geleitet werden, um dann später erneut der Crossflow-Membranfilteranlage zugeführt zu werden. Das Filtrat aus dem Filtratauslass 4 der einzelnen Module 1 a, b, c, d wird einem Puffertank für Filtrat 24 zugeführt, bzw. abgezogen und kann weiter einem Drucktank im Lagerkeller zugeführt werden.

Zur Reinigung der Crossflow-Membranfilteranlage kann über entsprechende Reinigungstanks 23, hier Säure-, Lauge- und Heißwassertanks, heiße Reinigungsflüssigkeit durch die Leitungen und die Membranfilteranlage gespült werden. Die Filtermodule 1 können auch durch Rückspülen über den Filtratauslass 4 rückgespült werden.

## Patentansprüche

1. Cross-Flow-Membranfilteranlage, insbesondere zur Bierfiltration, mit
mehreren Filtermodulen (1), die jeweils mindestens eine Membranfilterkerze (10) umfassen, und die jeweils einen Unfiltrateinlass (2), einen Unfiltratauslass (3) sowie einen Filtratauslass (4) aufweisen,
**dadurch gekennzeichnet, dass**
die Filtermodule (1) derart in Reihe geschaltet sind, dass Unfiltrat (U) aus dem Unfiltratauslass (3) eines Filtermoduls (1) dem Unfiltrateinlass (2) des folgenden Filtermoduls (1) zugeführt wird, und durch
eine Bypassleitung (15), die einen Teilstrom des Unfiltrats (U) vor dem Unfiltrateinlass (2) eines ersten Filtermoduls (1) an dem ersten Filtermodul (1) vorbeileitet und zumindest einem nachfolgenden Filtermodul (1) als Unfiltrat zuführt.

2. Crossflow-Membranfilteranlage nach Anspruch 1, **dadurch gekennzeichnet, dass** die Bypassleitung (15) zumindest eine Abzweigleitung (5) umfasst, über die Unfiltrat einem nachfolgenden Filtermodul (1) zugeführt wird.

3. Crossflow-Membranfilteranlage nach Anspruch 1 oder 2, **dadurch gekennzeichnet, dass** die Bypassleitung (15) in eine Verbindungsleitung mündet, die sich zwischen dem Unfiltratauslass (3) eines Filtermoduls (1) und dem Unfiltrateinlass (2) des nachfolgenden Filtermoduls (1) erstreckt.

4. Crossflow-Membranfilteranlage, **dadurch gekennzeichnet, dass** die Membranfilteranlage (n) Filtermodule (1) aufweist und die Bypassleitung (15) n-1 Filtermodulen (1) Unfiltrat zuleitet.

5. Crossflow-Membranfilteranlage nach Anspruch 2, **dadurch gekennzeichnet, dass** die Bypassleitung (15) in mindestens einer Abzweigleitung (5) eine Einrichtung (16) zum Einstellen der Flussmenge des Unfiltrats im nachfolgenden Filtermodul (1) umfasst.

6. Crossflow-Membranfilteranlage nach Anspruch 5, **dadurch gekennzeichnet, dass** die Einrichtung zum Einstellen der Flussmenge Flussminderer, insbesondere Klappen und/oder Blenden umfasst.

7. Crossflow-Membranfilteranlage nach einem der Ansprüche 1 bis 6, **dadurch gekennzeichnet, dass** eine Rückführleitung (17) vorgesehen ist, die Unfiltrat aus dem letzten Filtermodul (1) erneut der Membranfilteranlage zuführt.

8. Crossflow-Membranfilteranlage nach mindestens einem der Ansprüche 1 bis 7, **dadurch gekennzeichnet, dass** die Membranfilterkerze (10) eine Multitube-Membranfilterkerze ist.

9. Crossflow-Membranfilteranlage nach Anspruch 8, **dadurch gekennzeichnet, dass** der Durchmesser der Kanäle (11) der Multitube-Membranfilterkerze in einem Bereich von 0,5 bis 10mm liegt.

10. Crossflow-Membranfilteranlage nach mindestens einem der Ansprüche 1 bis 9, **dadurch gekennzeichnet, dass** zumindest ein Filtermodul (1) ein Mehrfachmodul ist, das mehrere in Reihe miteinander fest verbundene Einzelmodule umfasst.

11. Verfahren zur Filtration, insbesondere zur Bierfiltration, mit einer Crossflow-Membranfilteranlage gemäß Anspruch 1, **dadurch gekennzeichnet, dass** zur Reduzierung des Druckabfalls in den einzelnen Filtermodulen (1) ein Teilstrom des Unfiltrats an einem ersten Filtermodul (1) in einer Bypassleitung (15) vorbeigeleitet wird und zumindest einem nachfolgenden Filtermodul (1) als Unfiltrat zugeführt wird.

12. Verfahren nach Anspruch 11, **dadurch gekennzeichnet, dass** der Unfiltratfluss, der über die Bypassleitung (15) einem nachfolgenden Filtermodul zugeführt wird, derart eingestellt wird, dass die Flussmenge des Unfiltrats in allen Filtermodulen im gleichen Bereich liegt.

13. Verfahren nach Anspruch 11 oder 12, **dadurch gekennzeichnet, dass** das Unfiltrat aus dem letzten Filtermodul (1) erneut der Filtration durch die Crossflow-Membranfilteranlage rückgeführt wird.
